# EUROPÄISCHE PATENTANMELDUNG

(11) **EP 0 588 037 A1**
(43) Veröffentlichungstag der Anmeldung: **23.03.1994**
(21) Anmeldenummer: 93112221.2
(22) Anmeldetag: 30.07.1993
(51) Int. Cl.: B65G 47/90

(54) **Kurvengesteuerte Vorrichtung zum Bewegen von Werkstücken oder Werkzeugen**

(30) Priorität: 14.09.1992 CH 2888/92
(71) Anmelder: SIEMENS-ALBIS AKTIENGESELLSCHAFT, CH-8047 Zürich (CH)
(72) Erfinder: Buss, Hinrich, CH-8122 Binz (CH); Fischer, Bruno, CH-8953 Dietikon (CH)

(57) **Zusammenfassung**

Die Zuführvorrichtung weist ein Werkzeug (GW) auf, dessen Fahrweg durch die Form zweier drehbarer Kurven (KV, KH) festgelegt ist. Die Kurven (KV, KH) sind fest mit einem Zahnrad (ZR) verbunden, das von einer mit zwei Kolben (K1, K2) verbundenen Zahnstange (ZST) angetrieben wird. Die Kolben (K1, K2) sind in Zylindern (Z1, Z2) vorgesehen, denen über eine Druckleitung (D) und Ventile (V1 bzw. V2) ein Druck zuführbar ist. Der Bewegungsablauf des Greifwerkzeugs (GW) innerhalb des vorgesehenen Fahrwegs lässt sich dabei leicht kontrollieren. Ferner sind bei bescheidenem Aufwand und geringen Herstellungskosten für die Vorrichtung hohe Taktzyklen und ein schonender Umgang mit Vorrichtungsteilen und zu transportierenden Objekten gewährleistet.

## Beschreibung

Die vorliegende Erfindung betrifft eine Vorrichtung nach dem Oberbegriff des Patentanspruchs 1.

Zum automatischen Beschicken, Entladen und Transportieren von Objekten, z.B. Werkstücken, die an einem ersten Ort aufgenommen und an einem werteren Ort abgegeben werden sollen, werden oft kurvengesteuerte Vorrichtungen verwendet. Diese Zuführvorrichtungen weisen oft ein Greifwerkzeug auf, das sich z.B. durch ein Gestänge in horizontaler oder vertikaler Richtung bewegen lässt. Die entsprechenden Gestängeteile werden durch zwei normalerweise unterschiedlich ausgebildete über eine Weile angetriebene Kurven derart bewegt, dass das Werkzeug einem vorgegebenen Fahrweg folgt und jeweils zum richtigen Zeitpunkt am richtigen Ort ist. Derartige Zuführ- oder Einlegevorrichtungen werden z.B. in Bruno Lotter, Wirtschaftliche Montage: e. Handbuch für Elektrogerätebau und Feinwerktechnik, VDI-Verlag, Düsseldorf 1986, Seiten 146 und 147 beschrieben.

Zum Antrieb derartiger Vorrichtungen ist normalerweise eine Zentralsteuerwelle eines Automaten oder ein Getriebebremsmotor vorgesehen. Zentralsteuerwellen, die oft mehrere Vorrichtungen gleichzeitig antreiben, sind zur individuellen Steuerung einzelner Vorrichtungen ungeeignet. Durch einen Getriebebremsmotor ist eine gezielte Steuerung des Werkzeuges möglich, z.B. kann das Greifwerkzeug kurz angehalten werden, bevor es zur Aufnahme oder Abgabe von Objekten abgesenkt wird. Dadurch lässt sich der Bewegungsablauf der Vorrichtung leicht mit dem Bewegungsablauf einer weiteren Vorrichtung synchronisieren, von der Objekte zu übernehmen oder an die Objekte zu übergeben sind. Getriebebremsmotoren sind jedoch teuer, nicht verschleissfrei und benötigen eine aufwendige Steuerschaltung. Insbesondere bei hohen Taktzyklen vermögen diese Motoren, die einen hohen Energiebedarf aufweisen, den gestiegenen Anforderungen oft nicht mehr zu genügen. Die maximalen Taktzyklen werden dabei z.B. durch die maximale Start/Stop-Frequenz oder die Leistungsfähigkeit der Stromversorgung begrenzt.

Der vorliegenden Erfindung liegt daher die Aufgabe zugrunde, eine kurvengesteuerte Vorrichtung der eingangs beschriebenen Art zu schaffen, die leicht mit werteren Vorrichtungen zu synchronisieren ist und auch bei hohen Taktzyklen zuverlässig arbeitet. Diese Vorrichtung soll ferner kostengünstig in der Herstellung, im Betrieb und im Unterhalt sein.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Die erfindungsgemässe Vorrichtung lässt sich einzeln oder gruppenweise verwenden. Der individuelle Bewegungsablauf lässt sich durch die Antriebsvorrichtung auch bei sehr hohen Taktzyklen leicht kontrollieren und beeinflussen. Im Gegensatz zu bekannten Zuführvorrichtungen (z.B. beim pneumatisch gesteuerten X-Y-Betrieb) ergibt sich bei der erfindungsgemässen Vorrichtung eine sehr gute Laufruhe.

Die Erfindung wird nachfolgend anhand einer Zeichnung beispielsweise näher erläutert. Dabei zeigt:
- Fig. 1: eine erfindungsgemässe Zuführvorrichtung
- Fig. 2: Fahrwegbeispiele

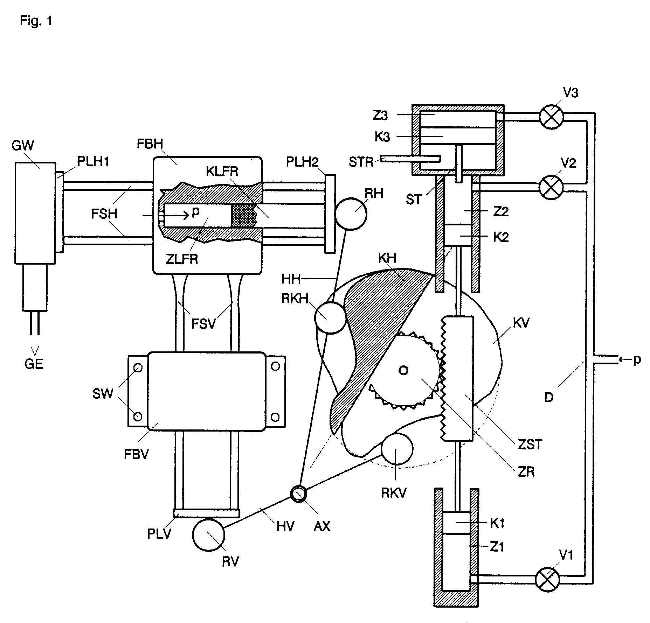

Fig. 1 zeigt eine erfindungsgemässe kurvengesteuerte Zuführvorrichtung, bei der ein zwei Greifelemente GE aufweisendes Greifwerkzeug GW mit zwei horizontal in einem Führungsblock FBH gelagerten Führungsstangen FSH verbunden ist. Die horizontalen Führungsstangen FSH, die einerseits über eine erste, das Greifwerkzeug GW haltende Verbindungsplatte PLH1 und andererseits über eine zweite an eine Andruckrolle RH anliegende Verbindungsplatte PLH2 miteinander verbunden sind, sind horizontal im Führungsblock FBH von Anschlag zu Anschlag verschiebbar. Der Führungsblock FBH ist ferner mit den oberen Enden zweier vertikal in einem Führungsblock FBV gelagerten Führungsstangen FSV verbunden, deren untere Enden über eine an eine Andruckrolle RV anliegende Verbindungsplatte PLV miteinander verbunden sind. Der Führungsblock FBH ist z.B. mittels vier Schrauben SW oder anderen Befestigungsmitteln an einem nicht dargestellten Träger montiert und daher weder in horizontaler, noch in vertikaler Richtung beweglich. Die Andruckrollen RH und RV sind je über einen Hebel HH bzw. HV einerseits mit einem Gelenk AX und andererseits mit einer an eine Kurve KH bzw. KV anliegenden Andruckrolle RKH bzw. RKV verbunden. Die Kurven KH und KV sind über eine gemeinsame Achse fest mit einem Zahnrad ZR verbunden, das über eine Zahnstange ZST von zwei Kolben K1 und K2 getrieben wird, die in Zylindern Z1, Z2 geführt werden. Den Zylindern Z1, Z2 ist ferner über Druckleitungen D Druckluft zuführbar, die gesteuert durch Mehrwegventile V1 und V2 entweder blockiert, in die Zylinder Z1 oder Z2 eingelassen oder aus diesen in den Aussenraum freigegeben wird. Ferner ist ein in einen Zylinder Z3 eingesetzter Kolben K3 vorgesehen, der mit einem Stab ST verbunden ist, der durch eine die Zylinder Z2 und Z3 verbindende Öffnung verschiebbar ist. Ferner ist einer von vorzugsweise mehreren Stoppern STR gezeigt, der in den Zylinder Z3 hinein verschiebbar ist und der innerhalb des Zylinders Z3 einen Anschlag für den Kolben K3 bildet.

In Fig. 1 ist die Verwendung sogenannter offener Kurven gezeigt, mit denen die Andruckrollen RKH, RKV nur lose verbunden sind. Für jede Andruckrolle RKH bzw. RKV ist daher eine Kraft erforderlich, durch die diese an die Kurven KH bzw. KV angedrückt werden und daher der Kurvenbahn folgen. Zur Erzeugung dieser Gegenkraft werden vorzugsweise in den Führungsblöcken FBH und FBV vorgesehene Druckfedern verwendet. Die im Führungsblock FBH vorgesehene Druckfeder wird durch einen Zylinder ZLFR und einen darin vorgesehenen Kolben KLFR gebildet, der mittels eines in den Zylinder ZLFR eingeführten Druckmediums über die Verbindungsplatte PLH2 und den Hebel HH die Andruckrolle RKH gegen die Kurve KH drückt. Besonders vorteilhaft dabei ist, dass der das Druckmedium aus der bereits beschriebenen Druckleitung D zuführbar ist. Die Gegenkraft für die Andruckrolle RKV wird vorzugsweise in gleicher Weise erzeugt. Bei der Verwendung geschlossener Kurven werden die Rollen RKH bzw. RKV durch eine beidseitig abgeschlossene Kurvenbahn geführt, wodurch Rückstellkräfte nicht mehr benötigt werden.

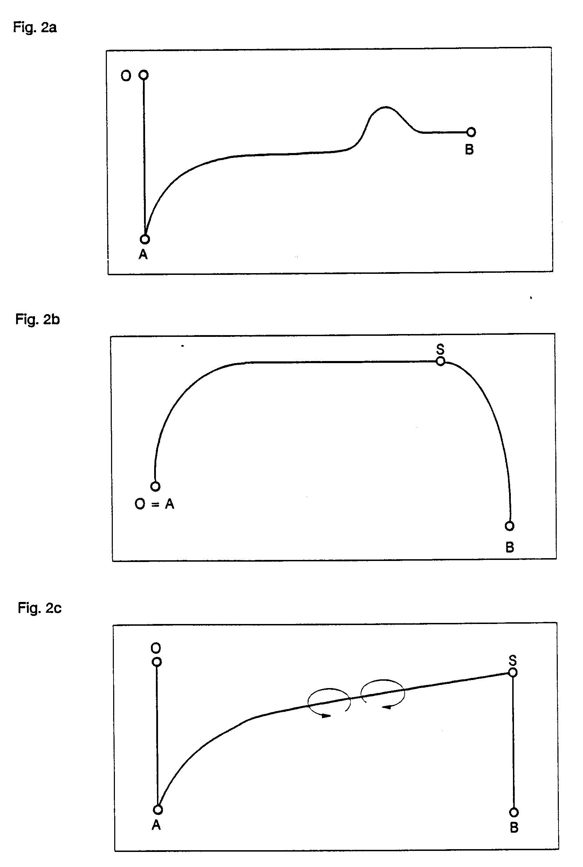

Die Vorrichtung funktioniert wie folgt:
Durch das Verschieben der Führungsstangen FSH bzw. FSV in den zugehörigen Führungsblöcken FBH bzw. FBV kann das Greifwerkzeug GW, selbstverständlich eingeschränkt durch die gegebenen Kurvenformen, an jede beliebige Stelle innerhalb eines Koordinatensystems geführt werden. Dabei kann für das Greifwerkzeug GW bzw. dessen Greifelemente GE ein beliebiger oder einer der in Fig. 2 gezeigten Fahrwege vorgesehen sein. In Fig. 2a wird das Greifwerkzeug GW vom Ruhepunkt O nach A, von A nach B und anschliessend zurück zum Ruhepunkt O geführt. Bei Punkt A ist z.B. die Aufnahme von Objekten von einem Förderband vorgesehen, die nachfolgend beim Punkt B an ein weiteres Förderband wieder abgegeben werden. Bevor das Objekt beim Punkt B wieder abgegeben wird, kann z.B. eine Einschlaufbewegung erfolgen, durch die ein Objekt z.B. in eine speziell geformte Fassung eingepasst werden kann.

In Fig. 2b ist der Ruhepunkt mit dem Punkt A identisch. Zu beachten ist, dass die Fahrwege auf abgerundeten Bahnen verlaufen, wodurch hohe Beschleunigungen zwischen den Punkten A und B ermöglicht werden. Vor dem Absenken nach Punkt B ist zusätzlich ein Haltepunkt S vorgesehen. Falls die bei Punkt B vorgesehene Vorrichtung zur Aufnahme der zugeführten Objekte nicht bereit ist, soll das Greifwerkzeug GW beim Haltepunkt S zeitweilig blockiert werden.

Im Fahrwegbeispiel nach Fig. 2c ist vorgesehen, dass das Greifwerkzeug GW zwischen den Punkten A und S nach Aufnahme eines Objekts nach rechts und nach Abgabe des Objekts zwischen den Punkten B und O zurück nach links gedreht wird. Dadurch wird die Erledigung schwieriger Transfer- und Einsetzvorgänge ermöglicht. Die Drehung des Greifwerkzeugs GW kann dabei elektromotorisch oder pneumatisch durch eine z.B. zwischen dem Greifwerkzeug GW und der Verbindungsplatte PLH1 vorgesehene Drehvorrichtung bewirkt werden.

Die Fahrwege werden durch die Kurven KH und KV sowie deren gegenseitige Verdrehung festgelegt. D.h. für eine horizontale durch die Kurve KH bestimmte Verschiebung des Greifwerkzeugs GW ist eine vertikale durch die Kurve KV bestimmte Verschiebung vorgesehen. Die Vorgabe der Kurve KV wird durch die Rolle RKV abgetastet und über den mit dem Gelenk AX verbundenen Hebel HV auf die Rolle RV bzw. die Verbindungsplatte PLV übertragen. Die Vorgabe der in der Zeichnung nur teilweise und schraffiert dargestellten Kurve KH wird durch die Rolle RKH abgetastet und über den mit dem Gelenk AX verbundenen Hebel HH auf die Rolle RH bzw. die Verbindungsplatte PLH2 übertragen. Durch das Zusammenwirken der sich auf- und abbewegenden Zahnstange ZST mit dem Zahnrad ZR werden die Kurven KH und KV vor- und zurückgedreht. Ein gewählter Fahrweg wird daher jeweils in beiden Richtungen befahren. Durch die Steuerung der Ventile V1 und V2 wird die Zufuhr (bzw. das Entweichen) der Druckluft in die Zylinder Z1 und Z2 und daher die Bewegung der Kolben K1 und K2 gesteuert. Durch die Zufuhr von Druckluft wird der Kolben K1 nach oben geführt, wodurch die Kurven KH und KV weiter im Gegenuhrzeigersinn gedreht werden. Dadurch wird das Greifwerkzeug GW gleichzeitig nach oben und nach links und anschliessend nach unten geführt. Die Bewegung des Greifwerkzeugs GW lässt sich mit den erfindungsgemässen Mitteln daher sehr einfach erzielen. Dies insbesondere, da die Zufuhr von Druckluft praktisch in allen modernen Fertigungsstätten gewährleistet ist. Durch den erfindungsgemässen Antrieb der Kurven KH und KV lassen sich dadurch sehr hohe Taktzyklen erreichen, die im wesentlichen nur durch die Art der zu transportierenden Objekte und die maximal erreichbare Durchflussmenge des Druckmediums begrenzt wird. Die Bewegung des Greifwerkzeugs GW, die Beschleunigung und das sanfte Abbremsen, lässt sich durch entsprechende Druckzufuhr daher leicht steuern. Ferner kann der unter oder obere Endanschlag der Zahnstange z.B. auch durch mechanische Stopper, wie z.B. Schieber festgelegt werden. Durch geeignete Federn (z.B. Spiral- oder Blattfedern) kann das Auftreffen auf die Stopper ebenfalls gedämpft werden. Ein Nachschwingen des Greifwerkzeugs GW kann dabei durch ein Nachführen des Druckes verhindert werden. Oft ist jedoch auch an weiteren Stellen ein Anhalten des Greifwerkzeugs GW notwendig. Falls z.B. die aufzunehmenden Objekte noch nicht bereitgelegt sind, soll das Greifwerkzeug GW nicht abgesenkt, sondern gestoppt werden. Dies wird durch den im Zylinder Z3 vorgesehenen Kolben K3 erreicht, der unter Zufuhr von Druckluft nach unten gedrückt wird. Dabei wird ein mit dem Kolben K3 verbundener Stab ST durch eine Öffnung in den Zylinder Z2 hineinbewegt, der den nach oben strebenden Kolben K2 blockiert. Durch die Wahl eines grösseren Querschnitts für den Zylinder Z3 wird der Kolben K3 mit einer stärkeren Kraft nach unten gedrückt als der Kolben K1 nach oben. Daher werden für die Zylinder Z1, Z2 und Z3 keine verschiedenen Drücke benötigt. Die Querschnitte der Zylinder Z1, ..., Z3 werden daher entsprechend den für die Kolben K1, ..., K3 bestimmten Prioritäten gewählt (Kolben K3 blockiert Kolben K2). Nachdem das Werkstück zur Aufnahme bereit liegt, wird der Druck aus dem Zylinder Z3 entlassen, wodurch die Kolben K3 und K2 sowie der über die Zahnstange ZST mit dem Kolben K2 verbundene Kolben K1 weiter nach oben bewegt werden. Ebenso könnte auf der anderen Seite ebenfalls ein mit einem Stab verbundener Kolben vorgesehen sein, der nach Bedarf den Lauf des Kolbens K1 nach unten beschränkt. Ferner ist natürlich auch die Anwendung von weiteren Zylindern und Kolben oder Stoppern STR denkbar, die auf die Kolben K1, K2, K3 oder die Zahnstange ZST einwirken. Durch die Stopper STR kann die Auslenkung z.B. des Kolbens K3 und damit der Haltepunkt S für jeden Bewegungsablauf nach Wunsch präzise festgelegt werden. Diese Abläufe lassen sich durch eine mit den Ventilen V und den Stoppern STR verbundenen Kontrolleinheit steuern und automatisieren.

Anstatt zwei Zylindern Z1, Z2 und zwei Kolben K1, K2 kann auch nur ein einzelner Kolben vorgesehen sein, der in Abhängigkeit der erzeugten Druckdifferenz zwischen dessen Front- und Rückseite innerhalb eines Zylinders bewegt wird.

Selbstverständlich können auch andere Werkzeuge als das beschriebene Greifwerkzeug GW oder lediglich Werkstücke mit der erfindungsgemässen Vorrichtung bewegt werden. Weiterhin können als Druckmedium auch Flüssigkeiten oder andere Gase bzw. Gasgemische verwendet werden.

Ferner können in den Druckleitungen Drosseln (z.B. Luftdrosseln) vorgesehen sein, mittels denen die Zufuhrmenge des Druckmediums und somit die Geschwindigkeit der Bewegung des Werkzeugs GW steuerbar ist.

Weiterhin besteht natürlich die Möglichkeit, die vorteilhafte Kraftübertragung (vom Antrieb auf die Kurven) mittels der Zahnstange ZST und dem mit den Kurven KV, KH verbundenen Zahnrad ZR durch andere Kraftübertragungsmechanismen (Hebel, Zugseile, Ketten, etc.) zu ersetzen.

Eine Kette würde z.B. um das Zahnrad ZR gelegt, und z.B. über Umlenkräder zu den Kolben K1 und K2 geführt. Die Verwendung eines Hebels zur Kraftübertragung ist in Fig. 3 dargestellt. Die Kurven KH und KV sind dabei mit einem Hebel DH fest verbunden, der von einem in einem gekrümmten Zylinder DZ geführten Kolben KDZ geführt ist.

## Patentansprüche

1. Vorrichtung zum Bewegen von Werkstücken und/oder Werkzeugen (GW), deren Fahrweg durch die Form zweier drehbarer Kurven (KV, KH) festgelegt ist , **dadurch gekennzeichnet,** dass die Kurven (KV, KH) mit einem steuerbaren pneumatischen oder hydraulischen Antrieb verbunden sind.

2. Vorrichtung nach Anspruch 1, **dadurch gekennzeichnet,** dass die Kurven (KV, KH) fest mit einem Zahnrad (ZR) verbunden sind, das von einer mit zumindest einem Kolben (K1, K2) verbundenen Zahnstange (ZST) angetrieben wird und dass die Kolben (K1, K2) in Zylindern (Z1, Z2) geführt sind, denen über eine Druckleitung (D) und Ventile (V1 bzw. V2) über ein Medium ein Druck zuführbar ist.

3. Vorrichtung nach Anspruch 1 oder 2, **dadurch gekennzeichnet,** dass zumindest ein weiterer in einem Zylinder (Z3) angeordneter und mit einem Stab (ST) verbundener Kolben (K3) derart vorgesehen ist, dass beim Ausfahren des Stabes (ST) einer der Kolben (K1, K2) blockiert wird, und dass dem Zylinder (Z3) über ein Ventil (V3) ein Druck zuführbar ist.

4. Vorrichtung nach Anspruch 1, 2 oder 3, **dadurch gekennzeichnet,** dass die Querschnitte der Zylinder (Z) entsprechend den den Kolben (K) zugeordneten Prioritäten gewählt sind.

5. Vorrichtung nach Anspruch 1, 2, 3 oder 4, **dadurch gekennzeichnet,** dass Stopper (STR) vorgesehen sind, durch die das Mass der Verschiebung der Kolben (K1, K2 und/oder K3) festlegbar ist.

6. Vorrichtung nach Anspruch 5, **dadurch gekennzeichnet,** dass die Ventile (V1, ..., V3) und allenfalls vorhandene mechanische Stopper (STR) durch eine Kontrolleinheit steuerbar sind.

7. Vorrichtung nach einem der vorhergehenden Ansprüche, **dadurch gekennzeichnet,** dass eine geschlossene und/oder eine offene Kurve (KH, KV) verwendet wird.

8. Vorrichtung nach einem der vorhergehenden Ansprüche**, dadurch gekennzeichnet,** dass bei der Verwendung einer offenen Kurve (KH, KV) ein mechanisch, pneumatisch oder hydraulisch betätigter Rückstellmechanismus vorgesehen ist.

9. Vorrichtung nach einem der vorhergehenden Ansprüche, **dadurch gekennzeichnet,** dass Drosseln vorgesehen sind, mit denen die Zufuhr des Druckmediums steuerbar ist.

10. Vorrichtung nach einem der vorhergehenden Ansprüche, **dadurch gekennzeichnet,** dass die Kurven (KH, KV) über eine Zahnstange (ZST), einen Hebel (DH) oder eine Kette mit dem Antrieb verbunden sind.
